# EUROPEAN PATENT SPECIFICATION

(11) **EP 0 584 033 B1**
(45) Date of publication and mention of the grant of the patent: **18.02.1998**
(21) Application number: 93500121.4
(22) Date of filing: 06.08.1993
(51) Int. Cl.: E05F 15/00, E05F 11/48

(54) **Antinipping protection system for window winders and sunroofs in automobile vehicles**
Einklemmschutz für Fensterheber und Schiebedächer von Kraftfahrzeugen
Dispositif de protection contre le pincement pour lève-vitre et toit ouvrant de véhicule

(30) Priority: 12.08.1992 ES 9201697
(43) Date of publication of application: 23.02.1994
(73) Proprietor: DISPOSITIVOS DE ACCESORIOS DE PUERTAS, S.A., E-09007 Burgos (ES)
(72) Inventor: Romero, Antonio, E-09006 Burgos (ES)
(74) Representative: Urteaga Simarro, José Antonio

(56) References cited:
- EP-A- 0 054 581
- EP-A- 0 473 068
- DE-A- 3 206 243
- DE-A- 3 736 400
- DE-A- 3 911 493

## Description

This invention relates to antinipping systems and devices that protect the electric window winders and sunroofs of automobile vehicles from nipping or trapping actions and so avoid accidents.

Several disadvantages have been noticed in known devices of this type, among which we can point out the following:
- They have a short service life due to the fact that they are subjected to the inertial forces that are generated at the stops in the devices in their end of stroke positions.
- They offer insufficient guarantees of being able to withstand the vibration, slamming and tapping tests, with the excessive weight and volume of the electronic board.
- They generate errors due to the accumulation of loss of reference, when the detection is carried out by counting the number of revolutions or turns, by mechanical hysteresis, ... etc., in such a way that their positioning is not very accurate, as well as being affected by dirt, vibrations, ... etc.
- When the vehicle loses its electrical power, due to problems with the battery, the references are lost and it becomes necessary to carry out a complete sweep or travel.

A drive system for doors and hatchbacks is known, through document EP.A.0054581, in which a triphasic motor is used, which acts on the power supply for one of its three coils, thus performing regulation of the motor revolutions, with the help of pressure sensors.

This solution is not feasible for application in automobile vehicle window winders, as triphasic motors cannot be applied in this technique. Moreover, another disadvantage of this known solution is the relative slowness with which the system responds to the requirements it is submitted to.

Through document DE.A.3206243, an anti-nipping drive system for windows is known, which has upper and lower contacts in the window travel path, with a motor, a relay, a switch and a timer switch, in a mechanical solution, according to which the variable on which the drive is based is the motor speed.

The disadvantages of this technique lie in the fact that it needs the assistance of a certain type of motor, which limits its general use. In the same way, the system is limited to a single model or form of operation, which makes it difficult to apply to other types of drives.

The principal object of this invention is the use of an electronic module whose assembly is highly versatile, since it can be fitted to the door by means of a support plate, clipped to the reducer motor, apart from the window winder, either inside or outside the door compartment, etc....

A second object of the invention is the elimination of the inertial force which is generated at the stops in the window winders or sunroofs in their end of stroke positions.

A third object of this invention is the possibility of using both electromechanical relays and solid state relays to govern or control the motor.

A fourth object is its adaptation to any type of window winder or sunroof to be protected, depending on the location of the sensors.

A fifth object of the invention is the free arrangement of the sensors on the movement shaft itself, thus eliminating the errors due to accumulation, as well as the absence of problems caused by dirt, vibrations, etc....

A sixth object of the present invention lies in not losing the references, even when there is a power failure.

A seventh and final object is the incorporation of a greater number of functions, such as the summer function and others.

Before proceeding with the development of this present specification, it is wished to point out that the description which is to be given relates to a cable-type window winder mechanism, although it is wished to make clear that the invention is also applicable to arm-type window winders, to sunroofs and to any mechanical part moved by a motor that needs stops and/or obstacles to be detected.

The window winder control with the antinipping system consists of an electronic module and one or more position sensors. Its purpose is to control the motor for raising and lowering the glass pane in the door in response to commands given by the user and by other signals coming from the vehicle.

The field covered by the guide rail or track is divided into three areas:
- The lower area, covering the space between the lower stop of the window winder and the lower limit of the protected area, which is delimited by the lower sensor.
- The protected area, or intermediate travel area, which varies depending on the type of door and the travel to be protected. This is the area in which the antinipping system operates and it is limited by the two sensors, upper and lower.
- The upper area, which corresponds to the space between the upper sensor and the upper travel stop or the total closure of the window pane. Obviously, this area is not protected by the antinipping system, because otherwise the window pane would be lowered again on coming up agains the upper stop in the door. This area is inside the rubber weather strip and therefore no kind of trapping or nipping can take place.

The invention allows the possibility of eliminating the lower sensor, with which the protection of the antinipping system would be carried out throughout the whole travel of the glass pane, except, of course, in the upper area. In this case, there would be two areas, one of them the protected area, from the lower stop to the upper sensor, and the other the upper area, from the said upper sensor to the upper stop in the travel or total closing of the glass pane.

The invention allows the lower sensor to be virtual (calculated), since its exact position is not important.

In the same way, the invention complies with the current German standard and is capable of being adapted to changes in this or in other future standards.

### Detection of stops and obstacles.

It is assumed that the glass pane reaches one of the stops when, because of the sensors, we know that it is in one of the end (upper or lower) areas, moving towards the stop (we know the direction of movement of the glass pane) and the speed of the motor is reduced until it is almost stopped.

It is assumed that the glass pane comes up against an obstacle when, because of the sensors, we know that it is in an intermediate area, moving so as to close the window and the speed of the motor is reduced to a value determined by the electronic control device.

The electrical and thermal characteristics are those demanded by the manufacturer of each vehicle model and its situation in the vehicle.

Before proceeding with the exposition of this invention, reference is made to the drawings which are included with this specification, which will help in the understanding of one of the possible applications of the system proposed. These drawings show the following:
- Figure 1 is a view of the general diagram of a cable-type window winder assembly with an electronic module.
- Figure 2 corresponds to the general connection diagram of the electronic module.
- Figure 3 is a block diagram of this application.

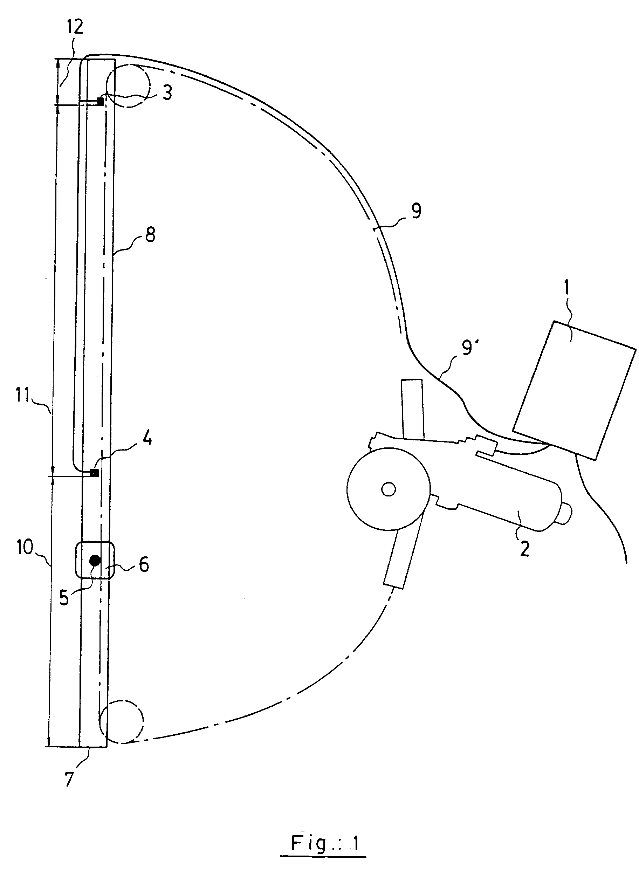

Referring now to Figure 1 of the drawings, the mechanism there shown includes the electronic module (1) and the reducer motor (2) the traction or drive cable (9) and the guide rail or track (8) with the drive plate (6) moved by the cable (9). We can also appreciate the three Areas: upper (12), protected (11) and lower (10), as well as the lower stop (7).

The module (1) is connected to the reducer motor (2) and to the two sensors, upper (3) and lower (4), by means of wiring (9').

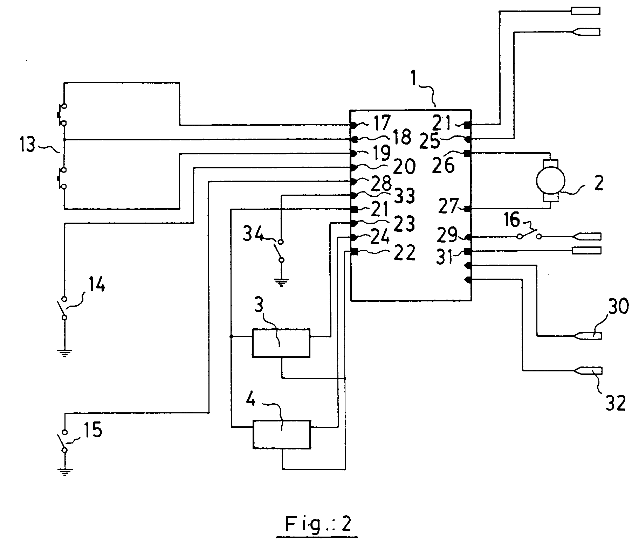

As regards Figure 2, the assembly in this diagram of the module will be developed as the different functions of the assembly are explained.

In this respect we will point out that the system has a series of integrated functions based on push buttons and switches.

When the push button (13) is activated (pressed) for a time shorter than "X", the raise/lower function of the glass pane is maintained until a stop is detected, until the pressing of either of the two keys (17, 19) of this push button or until any sticking or trapping is detected during ascending travel.

When one of the keys (17) or (19) of the push button panel is pressed for a time longer than "X", the raise/lower function is maintained while the key is kept pressed down, as long as no trapping or sticking is detected or a stop is reached. On reaching one of the two stops, upper or lower, the fact of keeping the key pressed down for travel towards the stop does not activate the motor (2).

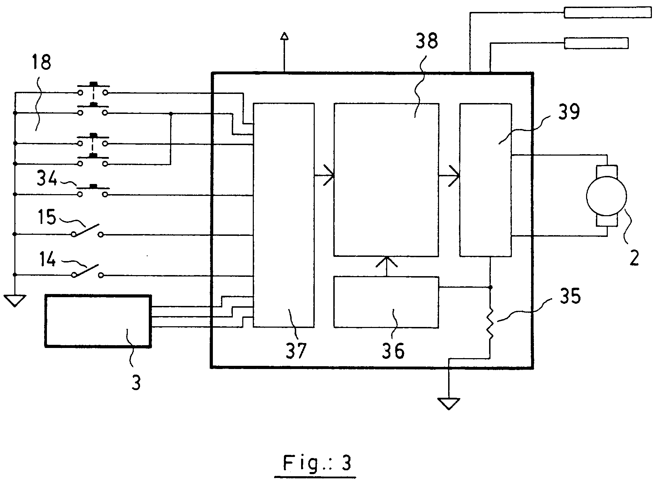

There is also the possibility of operating this system by means of a double-contact key in each of its two travels. (See Figure 3).

By pressing the key strongly for raising or lowering and then releasing it, the glass pane travels up or down until it reaches the corresponding stop. The movement can be interrupted by means of pressing one of the keys for raising or lowering again.

By pressing the key for raising or lowering without pressing fully, the glass pane travels up or down while the key is kept pressed.

In order to eliminate the antinipping system, a contact (20) is included in which, by means of a button switch (14), it is possible to eliminate the said system.

By means of a push button; the elimination of the means of protection through a push button is the function by which, by means of the continuous and simultaneous operation of the push button (14) and the key (17), the window can be closed.

By means of a switch; with the switch (14) activated in the ON position, the antinipping protection system is eliminated each time that the glass pane is raised.

Operation with the car door key; there is the availability of connecting the window winder/sunroof to the central locking system (29). With this function, all the windows of the vehicle that have this centralized system incorporated are moved towards their final position, window closed, when the central locking system is engaged.

During the application of this function, the antinipping system is activated.

Control without the key in the ignition. With the vehicle door open, the key removed from the ignition, with (25) without voltage, if any door of the vehicle is open, with the switch (15) in the ON position, control is still maintained over the window winder system/sunroof.

Control without the key in the ignition. With the doors closed; the key removed from the ignition, with (25) without voltage, and the doors closed, with the switch (15) in the OFF position, the window winder system/sunroof can be controlled for a time of "T" seconds after the doors are closed.

Summer position; the assembly has an input for the summer position (28), which is activated by operating the switch (16) and then the central locking system (29). This position means that the vehicle window panes open to a distance of 3 cm. from the upper part of the window, so that an air flow is established inside the vehicle and the passeniger compartment can be cooled.

There is also the possibility of inserting a temperature sensor (32) inside the said compartment, so that when a certain temperature is reached, 30°C. for example, the sensor is activated and sends a signal to the control unit in such a way that the vehicle windows are then set to the summer position.

Rain position; in the same way, there is also the possibility of fitting a moisture sensor (30), which is activated when a certain degree of humidity is reached and sends a signal to the control unit, which instantly moves the vehicle window panes to their final, window closed, position.

With reference to Figure 2, other functions not expressly mentioned previously are as follows:
(18) Common push button.
(21) Permanent positive battery.
(22) Ground.
(23) Output to the upper sensor (3).
(24) Output to the lower sensor (4).
(26) Motor (2).
(27) Motor (2).
(28) Summer position.
(30) Door contact.

In the same way, with reference to Figure 3, the following positions are represented:
(2) Motor.
(35) Motor speed control.
(36) Converter.
(37) Input selection and filter.
(38) Central processing unit.
(39) Motor control and power driver.
(3) Sensor.
(34) Protection blocks.
(15) Door push button.
(14) Summer position push buttom.
(18) Common push button.

It is important to point out, once having described the nature and advantages of this invention, the non-restrictive character of the same, inasmuch as changes in the shape, material or sizes of its constituent parts will not in any way alter its essentiality, as long as they do not mean a substantial variation in the assembly.

## Claims

1. Antinipping protection system for window winders and sunroofs, as well as for any mechanical part moved by the effect of a motor that needs stops and/or obstacles to be detected, with a motor (2), characterized in that it consists of an electronic module or exchange (1), and one or more position sensors (3,4), in that the said position sensors are located on the movement shaft itself (8) of the window pane with the protected area perfectly delimited, in that the power supply from the exchange or module (1) to the motor (2) is carried out either with solid state relays or electromechanical relays, in that it can be provided with motor speed regulation, keeping the speed of the window pane constant.

2. Antinipping protection system for window winders and sunroofs, in accordance with claim 1, characterized in that the assembly can be adapted to any other unit by only altering the location of the sensors (3,4).

3. Antinipping protection system for window winders and sunroofs, in accordance with claim 1, characterized in that the electronic module (1) can be fastened to any element, such as the reducer motor casing, the door, the control panel, etc.

4. Antinipping protection system for window winders and sunroofs, in accordance with claims 1 and 3, characterized in that it introduces the following functions:
- Pressing for time periods, either short or prolonged;
- Double contact pressing;
- Elimination of the antinipping system;
- Operation with the vehicle door key, in which all the windows, including the sunroof, are moved sequentially or jointly towards the final position, with windows or sunroof closed, when the central locking is activated;
- Control without the ignition key and with the doors open: when the key is removed from the ignition and with any of the doors open, there is total control over the window winders or sunroof;
- Control without the ignition key and with the doors closed: when the key is removed from the ignition and with the doors closed, control over the window winders or the sunroof is for "T" seconds after the key is removed;
- Summer position, according to which the window panes or the sunroof of the vehicle are situated 3 cm. from the final closed position, either by means of the central locking system once that the summer position switch is activated, or by means of a temperature sensor fitted inside the passenger compartment;
- Rain position, in which the window panes and the sunroof are moved to the closed position when a certain degree of moisture is detected by a sensor;
- Inside temperature control.

## Patentansprüche

1. Klemmschutzsystem für Fensterheber und Sonnendächer sowie für jegliche Art von mechanischen Teilen, die durch einen Motor bewegt werden und für die Anhalten und/oder Hindernisse gemeldet werden müssen, mit einem Motor (2), dadurch gekennzeichnet, dass es aus einem elektronischen Modul oder Wechsler (1) und einem oder mehreren Positionsfühlern (3, 4) besteht, dass die besagten Positionsfühler sich auf der die Bewegung der Fensterscheibe übertragenden Welle (8) selbst befinden, wobei der geschützte Bereich bestens abgegrenzt ist, dass die Energiezuführung von dem Wechsler oder Modul (1) zum Motor (2) entweder über fest eingestellte oder elektromagnetische Relais erfolgt, dass es mit einem Geschwindigkeitsregler für den Motor versehen werden kann, um die Geschwindigkeit der Fensterscheibe konstant zu halten.

2. Klemmschutzsystem für Fensterheber und Sonnendächer gemäss Anspruch 1 dadurch gekennzeichnet, dass die Baugruppe an jedwede andere Einheit Angepasst werden kann, indem nur die Lage der Fühler (3, 4) verändert wird.

3. Klemmschutzsystem für Fensterheber und Sonnendächer gemäss Anspruch 1 dadurch gekennzeichnet, dass das elektronische Modul (1) an jedwedem Element befestigt werden kann, wie zum Beispiel das Gehäuse des Untersetzungsmotors, der Tür, der Schalttafel, usw.

4. Klemmschutzsystem für Fensterheber und Sonnendächer gemäss Anspruch 1 und 3 dadurch gekennzeichnet, dass es folgende Funktionen einführt:
- Drücken über Zeiträume, entweder kurze oder längere;
- doppelkontaktierendes Drücken;
- Unterdrückung des Klemmschutzsystems;
- Handhabung mit dem Türschlüssel des Wagens, wobei alle Fenstereinschliesslich des Sonnendaches nacheinander oder zusammen in ihre Endstellung gebracht werden, wobei die Fenster oder das Sonnendach geschlossen sind, wenn die Zentralverriegelung aktiviert ist;
- Betätigung ohne den Zündschlüssel und bei offenen Türen: Wenn der Zündschlüssel abgezogen wird und irgendeine Tür offen steht, besteht eine vollständige Möglichkeit der Betätigung der Fensterheber oder des Sonnendaches;
- Betätigung ohne Zündschlüssel und bei geschlossenen Türen: Wenn der Zündschlüssel abgezogen wird und die Türen geschlossen sind, besteht ein Zeitraum von "T" Sekunden, während dessen die Fensterheber und Sonnendach nach Abzug des Schlüssels betätigt werden können;
- Sommerstellung, in der die Fenstercheiben oder das Sonendach des Fahrzeuges 3 cm vor ihrer geschlossenen Endstellung stehen bleiben, entweder über das Zentralverriegelungssystem, sobald die Sommerstellung eingeschaltet ist, oder über einen in dem Fahrgastraum angebrachten Temperaturfühler;
- Regenstellung, bei der die Fenster und das Sonnendach in eine geschlossene Stellung gebracht werden, sobald ein Fühler einen gewissen Grad an Nässe feststellt;
- Steuerung über Innenraumtemperatur.

## Revendications

1. Système de protection anti-gouttière pour lève-vitres électriques et toits ouvrants, ainsi que pour toute autre partie mécanique mue par les effets d'un moteur qui nécessite de détecter la présence de butées et/ou d'obstacles, avec un moteur (2) qui consiste en un module électronique ou une centrale (1), et un ou plusieurs capteurs (3,4) dans lequel ces capteurs sont situés sur l'axe de mouvement de la vitre de la fenêtre lui-même, la zone protégée étant parfaitement délimitée, dans lequel l'alimentation depuis la centrale ou depuis le module (1) vers le moteur (2) est acheminée soit par des relais solides statiques soit par des relais électromécaniques, et qui être muni d'un régulateur de vitesse du moteur, la fenêtre conservant une vitesse toujours constante.

2. Système de protection anti-gouttière pour lève-vitres électriques et toits ouvrants, selon la description 1, caractérisé par le fait que l'ensemble peut être adapté à toute autre unité en procédant à une simple modification de la position des capteurs (3,4).

3. Système de protection anti-gouttière pour lève-vitres électriques et toits ouvrants, selon la description 1, caractérisé par le fait que le module électronique (1) peut être fixé à n'importe quel élément tel que le boîtier du moteur du réducteur, la portière, le tableau de bord, etc.

4. Système de protection anti-gouttière pour lève-vitres électriques et toits ouvrants, selon les descriptions 1 et 3, caractérisé par le fait qu'il introduit les fonctions suivantes:
- Pression pour des périodes de temps, ou courtes ou prolongées;
- Pression à double contact;
- Élimination du système anti-gouttière;
- Opération avec la clé d'ouverture de porte du véhicule,dans laquelle les fenêtres, y compris le toit ouvrant, sont mues séparément ou ensemble vers la position finale, avec les fenêtres et le toit ouvrant fermés quand la fermeture centralisée des portes est activée;
- Contrôle sans clé de contact et avec les portières ouvertes: quand la clé est enlevée du contact et avec une des portes ouvertes, il y a un contrôle total sur la fermeture électrique des fenêtres ou du toit ouvrant;
- Contrôle sans clé de contact et avec les portières fermées: quand la clé est enlevée du contact et avec les portes fermées, le contrôle sur les ouvertures électriques des fenêtres ou sur le toit ouvrant se maintient pendant "X" secondes après que la clé ait été enlevée;
- Position d'été, qui permet que les vitres des fenêtres ou du toit ouvrant soient situées à 3 cm de la position finale fermée, ou bien au moyen du système de fermeture centralisée lorsque la position d'été est activée, ou au moyen d'un capteur de température installé à l'intérieur de l'habitacle du passager;
- Position de pluie, dans laquelle les vitres des fenêtres et du toit ouvrant sont ramenées à la position fermée quand un certain degré d'humidité est détecté par un capteur;
- Contrôle de température intérieure.
